# FASCICULE DE BREVET EUROPEEN

(11) **EP 4 086 071 B1**
(45) Date de publication et mention de la délivrance du brevet: **06.11.2024**
(21) Numéro de dépôt: 22170776.3
(22) Date de dépôt: 29.04.2022
(51) Int. Cl.: B30B 11/00, B30B 15/02, H01M 4/04, H01M 4/139, H01M 6/18, H01M 10/04, H01M 10/052, H01M 10/0562, H01M 10/0565, H01M 10/0585

(54) **CHAMBRE DE COMPRESSION POUR PRESSE ET PRESSE COMPORTANT UNE TELLE CHAMBRE**
DRUCKKAMMER FÜR EINE PRESSE UND PRESSE, DIE EINE SOLCHE DRUCKKAMMER UMFASST
COMPRESSION CHAMBER FOR PRESS AND PRESS COMPRISING SUCH A CHAMBER

(30) Priorité: 03.05.2021 FR 2104625
(43) Date de publication de la demande: 09.11.2022
(73) Titulaire: Commissariat à l'Energie Atomique et aux Energies Alternatives, 75015 Paris (FR)
(72) Inventeur: TARNOPOLSKIY, Vasily, 38054 GRENOBLE Cedex 09 (FR); BABINDAMANA, Dan, 38054 GRENOBLE Cedex 09 (FR); VANDEKERKOVE, Sophie, 38054 GRENOBLE Cedex 09 (FR)
(74) Mandataire: Brevalex

(56) Documents cités:
- DE-A1- 2 752 603
- US-A- 3 044 113
- US-A- 3 797 986
- US-A1- 2005 150 444
- US-A1- 2012 115 018
- US-A1- 2013 133 531
- US-A1- 2020 376 454

## Description

### DOMAINE TECHNIQUE ET ÉTAT DE LA TECHNIQUE ANTÉRIEURE

La présente invention se rapporte à une chambre de compression pour presse de fabrication de pastilles, et à une presse de fabrication de pastilles, plus particulièrement à une presse à chaud.

Dans le domaine des batteries solides également appelées batteries tout solide, on peut souhaiter réaliser au moins l'électrolyte solide sous forme de pastilles fines multicouches de quelques dizaines de µm. Les couches peuvent être fabriquées par pressage à chaud de matériau.

Une presse comporte une chambre de compression comprenant généralement une matrice et deux pistons ou poinçons, un piston inférieur et un piston supérieur pénétrant dans la matrice. La poudre est placée dans la matrice et les pistons exercent une pression sur la poudre. La presse est chauffée.

Pour extraire la pastille de la matrice, le piston supérieur est retiré de la matrice et le piston inférieur se soulève et pousse la pastille vers le haut, celle-ci sort de la matrice. Cependant du fait des différences de coefficients de dilatation entre celui du matériau de la matrice et celui du matériau de la poudre et du collage qui peut apparaître entre la matrice et la pastille, le retrait de la pastille est complexe et les risques d'apparition de fissures dans les pastilles peuvent exister. Le document US 2005/150444 A1 divulgue une chambre de compression selon le préambule de la revendication 1.

### EXPOSÉ DE L'INVENTION

C'est par conséquent un but de la présente invention d'offrir une chambre de compression pour presse de fabrication de pastilles permettant un retrait de la pastille avec un risque réduit de détérioration de celle-ci, voire sans détérioration de celle-ci.

Le but énoncé ci-dessus est atteint par une chambre de compression pour presse comportant une matrice, un piston inférieur, un piston supérieur. La matrice comporte une première partie recevant le ou les matériaux destinés à former la pastille dans laquelle pénètrent les pistons, la première partie comprend plusieurs éléments qui assemblés entre eux délimitent la zone de compression. La matrice comporte également une deuxième partie entourant la première partie et assurant l'immobilisation des éléments de la première partie les uns par rapport aux autres. La première partie est logée dans la deuxième partie de manière amovible. La deuxième partie est également réalisée en plusieurs éléments et comporte des moyens de serrage pour serrer les éléments entre eux. Lors du pressage, les éléments de la première partie sont maintenus les uns contre les autres par la deuxième partie dont les éléments sont serrés les uns contre les autres. La poudre est placée dans la zone de pressage et est comprimée par les pistons. Lors du démoulage, les moyens de serrage sont desserrés libérant les éléments de la deuxième partie, la première partie est extraite de la deuxième partie et les éléments de la première partie n'étant plus maintenus les uns contre les autres, ils se séparent libérant la pastille.

Le démoulage de la pastille se déroule alors sans lui appliquer de contrainte. Les risques de détérioration de celle-ci sont sensiblement réduits.

De manière très avantageuse, la première partie, la deuxième partie et les pistons sont fabriqués en un même matériau présentant un faible coefficient de dilatation, par exemple en carbure de tungstène ou en des matériaux ayant des coefficients de dilatation faibles et proches.

Avantageusement, un chauffage est appliqué lors du pressage du ou des matériaux formant la pastille.

En d'autres termes, on réalise une matrice en plusieurs parties ce qui permet d'extraire la pastille non pas en la poussant hors de la matrice mais en démontant la matrice autour de la pastille.

Les pastilles peuvent être fabriquées à partir de matériaux en poudre, ou de portions de membrane empilées, ou d'une superposition de couches de matériaux en poudre et de portions de membrane.

L'un des objets de la présente demande est une chambre de compression pour la fabrication de pastilles par pressage de matériau, comprenant les caractéristiques de la revendication 1.

Dans un exemple préféré, la partie intérieure, la partie extérieure, le piston supérieur, le piston inférieur et les moyens de serrage sont fabriqués dans un ou des matériaux présentant un coefficient de dilatation inférieur à 6,0 µm·m⁻¹·K⁻¹.

Dans un autre exemple non conforme à l'invention, la partie intérieure, la partie extérieure, le piston supérieur, le piston inférieur et les moyens de serrage sont fabriqués dans des matériaux différents ayant des coefficients de dilatation proches, de préférence la différence entre les coefficients de dilatation est inférieure à 10%.

La partie intérieure, la partie extérieure, le piston supérieur, le piston inférieur et les moyens de serrage sont avantageusement fabriqués en carbure de tungstène ou en graphite.

Par exemple, la partie intérieure comporte quatre éléments.

Selon une caractéristique additionnelle, la chambre de compression comporte un lubrifiant solide entre la surface latérale extérieure de la première partie et la surface du logement de la deuxième partie.

Selon une autre caractéristique additionnelle, les moyens de serrage comportent au moins deux vis.

Dans un exemple de réalisation, le piston supérieur comporte une première portion portant la face de compression, et une deuxième portion destinée à être en contact avec des moyens de chauffage de la presse et des moyens de compression, ladite deuxième portion présentant une section transversale supérieure à la première portion.

Dans un autre exemple de réalisation, le piston supérieur comporte une section transversale constante et à une extrémité opposée à celle portant la face de compression, une face destinée à être en contact avec des moyens de chauffage et avec des moyens de compression, ladite face étant bordée par un chanfrein.

Un autre objet de la présente demande est une presse pour fabrication de pastille comportant une chambre de compression selon l'invention destinée à recevoir le ou les matériaux destinés à former la pastille, des moyens de compression configurés pour exercer un effort sur au moins l'un des pistons en direction de l'autre piston.

De manière préférée, la presse comporte des moyens de chauffage configurés pour venir en contact avec une face d'au moins un des pistons inférieur et supérieur, ladite face étant opposée à la face de compression.

Un autre objet de la présente demande est un procédé de fabrication d'une pastille selon la revendication 10.

De préférence, lors de l'étape d) un chauffage est appliqué au piston supérieur et/ou au piston inférieur et lors de l'étape e) l'application du chauffage est interrompue.

Le matériau peut être un matériau en poudre et, lors de l'étape b), la poudre est aplanie et/ou un effort inférieur à celui exercé à l'étape d) est appliqué à la poudre.

Dans un exemple avantageux, le procédé de fabrication comporte entre les étapes f) et g), n répétitions des étapes b) à e) le matériau étant identique ou différent du matériau mis en place précédemment, n étant un entier strictement positif, de sorte à former une pastille multicouche.

Lors de la répétition des étapes b) à e) le matériau mis en place peut être une portion de membrane ayant la section de la chambre de compression. La portion de membrane a par exemple une épaisseur comprise entre 1 µm et 20 µm.

Avantageusement, au moins l'étape d) se déroule dans un environnement sous vide.

Dans un exemple, on réalise au moins trois couches, une couche à partir d'un matériau en poudre formant une électrode formant anode, une couche à partir d'un matériau en poudre pour former un électrolyte solide pour batterie à électrolyte solide, et une couche à partir d'un matériau en poudre formant une électrode formant cathode, l'électrolyte étant entre l'anode et la cathode. Entre la mise en place du matériau formant l'une des électrodes et celui formant l'électrolyte on dispose avantageusement un matériau sous forme de membrane destiné à former un séparateur.

### BRÈVE DESCRIPTION DES DESSINS

La présente invention sera mieux comprise sur la base de la description qui va suivre et des dessins en annexe sur lesquels:
[Fig. 1] est une représentation schématique d'une vue de côté d'un exemple de presse par pressage à chaud comportant un exemple de chambre de compression selon l'invention.
[Fig. 2] est une vue de dessus d'une matrice formant une partie de la chambre de compression de la figure 1.
[Fig. 3] est une vue de dessus d'une première partie de la chambre de compression de la figure 1.
[Fig. 4] est une vue de dessus d'une deuxième partie de la chambre de compression de la figure 1.
[Fig. 5A] est une vue de côté d'un exemple d'un piston supérieur mis en oeuvre dans la chambre de compression de la figure 1.
[Fig. 5B] est une vue de côté d'un autre exemple d'un piston supérieur pouvant être mis en oeuvre dans une chambre de compression selon l'invention.
[Fig. 6] est une vue de côté d'un exemple d'un piston inférieur mis en oeuvre dans la chambre de compression de la figure 1.
[Fig. 7] est une vue de dessus d'une variante de réalisation de la deuxième partie.

### EXPOSÉ DÉTAILLÉ DE MODES DE RÉALISATION PARTICULIERS

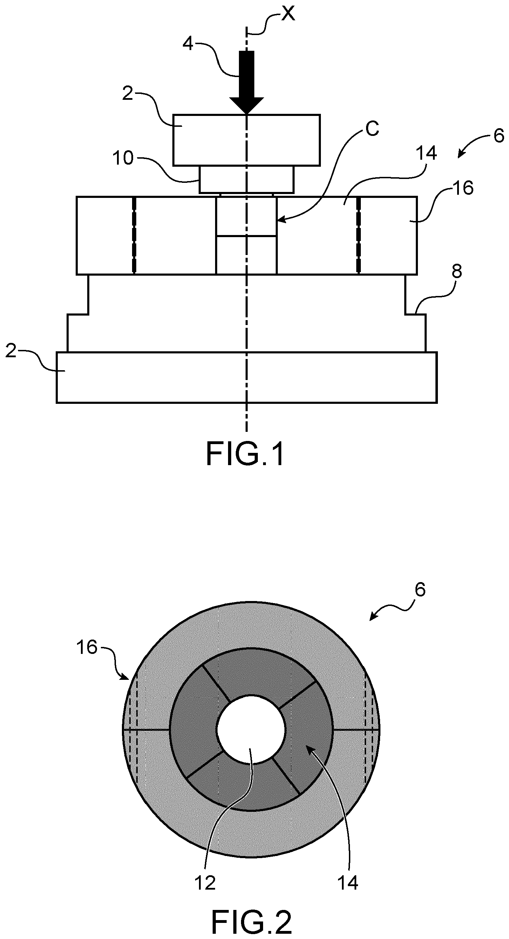

Sur la figure 1, on peut voir représentée schématique une presse pour fabriquer des pastilles par pressage à chaud à partir d'un matériau comportant une chambre de compression C recevant le matériau à compresser, des moyens de chauffage 2 de la chambre de compression et des moyens 4 pour exercer des efforts généralement sur le piston supérieur de la chambre de compression, symbolisés par une flèche. Les moyens 4 sont par exemple formés par des plateaux horizontaux (non représentés). La chambre de compression repose par son piston inférieur le plateau inférieur de la presse. En variante, l'effort est exercé sur le piston inférieur en direction du piston supérieur.

Le ou les matériaux utilisés pour fabriquer les pastilles sont en poudre ou sous forme de membrane, par exemple en polymère et/ou en céramique.

La chambre de compression C comporte une matrice 6, un piston ou poinçon inférieur 8 et un piston ou poinçon supérieur 10. La chambre de compression présente un axe longitudinal X le long duquel le piston 10 se déplace, le piston 8 étant immobile une fois les éléments assemblés.

La figure 2 représente la matrice 6 vue de dessus. La matrice 6 comporte un passage traversant 12, dans lequel sont destinés à coulisser les pistons inférieur 8 et supérieur 10. Le passage traversant 12 est destiné à former avec les pistons 8, 10 une zone de compression et à définir la forme et les dimensions extérieures de la pastille.

La paroi latérale du passage traversant 12 délimite la paroi latérale de la zone de compression et les extrémités planes des pistons délimitent les faces d'extrémité de la zone de compression. Le diamètre extérieur des pistons 8, 10 est ajusté à celui du passage central.

La matrice est composite, i.e. elle est réalisée en plusieurs parties. Elle comporte un première partie ou partie intérieure 14 et un deuxième partie ou partie extérieure 16.

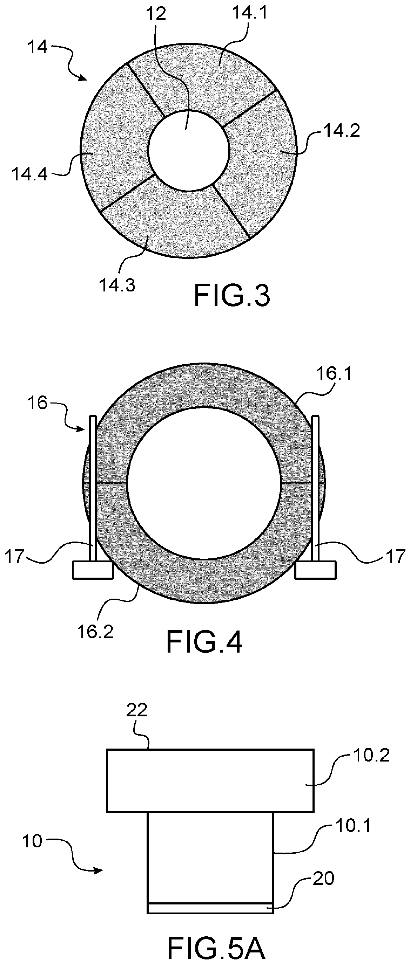

La partie intérieure 14, représentée seule sur la figure 3, comporte le passage traversant 12l et présente une section transversale annulaire, de préférence de section constante. La partie intérieure 14 comprend plusieurs éléments formant des portions d'anneau qui assemblés forment un anneau complet. Dans l'exemple représenté, la partie intérieure 14 comporte quatre éléments 14.1, 14.2, 14.3 et 14.4 s'étendant chacun sur un angle de 90°. En variante la partie intérieure 14 comporte trois éléments ou plus de quatre éléments, par exemple cinq ou six. De préférence, les éléments s'étendent tous sur une même valeur angulaire. Dans cet exemple, les éléments annulaires ont des faces d'extrémité planes et sont en appui plan les uns contre les autres.

La partie extérieure 16, représentée seule sur la figure 4, a également une section transversale annulaire dont le diamètre intérieur est suffisant pour loger la partie intérieure 14 tout en assurant le maintien des éléments 14.1 à 14.4 les uns contre les autres.

Dans cet exemple et de manière préférée, la partie extérieure 16 comporte deux éléments 16.1, 16.2 s'étendant angulairement sur 180°. Dans cet exemple, les éléments 16.1, 16.2 comportent des faces d'extrémités planes. La partie extérieure 16 comporte des moyens de serrage 17 des deux éléments 16.1 et 16.2 l'une contre l'autre de sorte qu'ils forment une fois assemblés un anneau rigide. Dans l'exemple représenté, les moyens de serrage 17 comportent deux vis et des alésages munis chacun d'un taraudage, perpendiculaires aux faces d'extrémité. Lorsque les vis sont montées dans les alésages, elles exercent un effort de serrage sur les faces d'extrémité des éléments 16.1, 16.2.

En variante, les moyens de fixation comportent un collier de serrage ou les deux éléments 16.1, 16.2 sont articulés l'un par rapport à l'autre et les moyens de fixation sont de type à genouillère. Tout autre moyen permettant de maintenir rigidement l'un contre l'autres les éléments 16.1 et 16.2 afin qu'ils définissent un anneau entre dans le cadre de la présente invention.

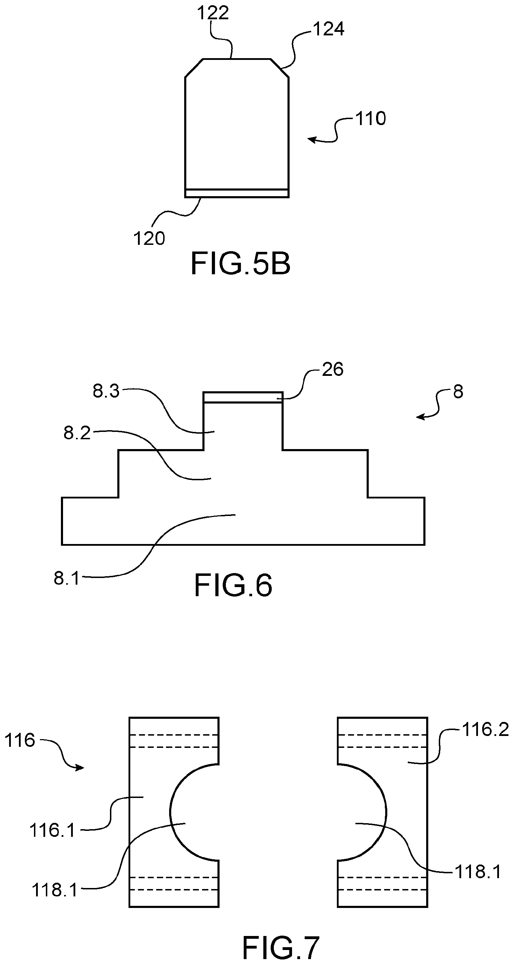

Dans l"exemple représenté, les éléments 16.1 et 16.2 ont une section transversale en forme d'arc de cercle. Sur la variante représentée sur la figure 7, la deuxième partie 116 a une forme extérieure par exemple carrée en deux parties 116.1 et 116.2, chaque partie comportant dans une face un évidement 118.1, 118.2 en forme de demi-disque.

Sur la figure 5A, on peut voir vue de côté un exemple de réalisation d'un piston supérieur 10, il comporte une portion de petit diamètre 10.1 correspondant au diamètre de la zone de compression et portant la face d'extrémité 20, dite face de compression, destinée à comprimer le matériau, et une portion de plus grande diamètre 10.2 servant à la manipulation du piston supérieur 10. Les moyens de chauffage sont destinés à être mis en contact avec la face d'extrémité 22 du piston supérieur 10 opposée à la face de compression 20. Dans cet exemple avantageux, la face d'extrémité 22 présente une grande aire de contact avec les moyens de chauffage, ce qui améliore le transfert de chaleur entre les moyens de chauffage et le piston supérieur.

La face de compression 20 présente un très bon état de surface, de préférence elle est polie miroir, afin de produire des pastilles dont les surfaces présentent une planéité élevée.

Sur la figure 5B, on peut voir un autre exemple de piston supérieur 110 pouvant être mis en oeuvre dans la chambre de compression. Dans cet exemple, le piston comporte un corps présentant sensiblement le même diamètre extérieur. Sa face 122 opposée à sa face de compression 120 est bordée par un chanfrein 124, ce qui augmente sa résistance à la pression exercée par les moyens de compression.

Sur la figure 6, on peut voir un exemple de réalisation d'un piston inférieur 8. Il comporte trois portions successives de diamètre décroissant 8.1, 8.2, 8.3. La portion de plus petit diamètre porte la face de compression 26 et présente un diamètre correspondant à celui de la zone de compression.

La portion de plus grand diamètre 8.1 permet une manipulation plus aisée du piston inférieur. Un piston inférieur ne présentant que deux portions de diamètre différent ne sort pas du cadre de la présente invention.

La face de compression 26 présente un très bon état de surface, de préférence elle est polie miroir.

Les matériaux utilisés pour fabriquer les pièces de la chambre de compression, i.e. les éléments de la partie intérieure, les éléments de la partie extérieure, les vis des moyens de serrage et les pistons inférieur et supérieur, présentent avantageusement des coefficients de dilatation faibles et proches les uns des autres afin de réduire les problèmes liés à la dilation différentielle entre les pièces. De préférence, la différence entre les coefficients de dilatation des matériaux utilisés est inférieure à 10%.

Le coefficient de dilatation thermique des matériaux utilisés pour fabriquer les pièces de la chambre de compression est inférieur ou égal à 9,0 µm·m⁻¹·K⁻¹ et avantageusement inférieur à 6,0 µm·m⁻¹·K⁻¹. Le carbure de tungstène qui est particulièrement adapté à réaliser les éléments de la chambre de compression a un coefficient de dilatation thermique compris entre 5,5 µm·m⁻¹·K⁻¹ et 7 µm·m⁻¹·K⁻¹.

Selon l'invention, toutes les pièces de la chambre de compression sont réalisées dans le même matériau. Le ou les des matériaux des pièces de la chambre de compression sont choisis en fonction de la température de pressage et de la pression de pressage, ainsi que de leur compatibilité chimique avec le matériau de la pastille.

Par exemple, les pièces de la chambre de compression sont en carbure de tungstène supportant jusqu'à 800°C en atmosphère inerte et supportant des pressions élevées, par exemple jusqu'à 1 GPa.

En variante, les pièces de la chambre de compression sont en graphite supportant jusqu'à 2700°C en atmosphère inerte, mais plus adapté à des faibles pressions par exemple jusqu'à 100 MPa.

En variante encore, les pièces de la chambre de compression sont en alliage Fe-Co-Ni-Cr-W supportant jusqu'à 300°C, et offrant une résistance au fluage élevée.

Un exemple de fabrication d'une pastille avec un matériau en poudre avec la chambre de compression va maintenant être décrit.

La partie intérieure 14 est assemblée autour de la portion de plus petit diamètre 8.1 du piston inférieur 8. Ensuite la partie extérieure16 dans un état desserré est disposée autour de la partie intérieure 14. Ensuite, les moyens de serrage sont actionnés pour serrer les deux éléments 16.1 et 16.2 les uns contre les autres.

La poudre est ensuite disposée dans la zone de compression sur la face de compression 26 du piston inférieur 8.

Le piston supérieur 10 est introduit dans la partie intérieure 14. La chambre de compression est placée entre les deux plateaux de la presse.

Une force de compression est exercée sur le piston supérieur 10 de sorte à presser la poudre entre les deux faces de compression. Un chauffage est appliqué à la chambre de compression à travers le ou les plateaux. La durée de la phase de chauffage et de compression dépend du matériau de la poudre.

Pour retirer la pastille ainsi formée, les moyens de serrage sont désactivés assurant un relâchement des contraintes exercées par la partie extérieure 16 sur la partie intérieure 14. Un effort de poussée axial est appliqué sur la partie intérieure 14 de sorte à l'extraire de la partie extérieure 16. De préférence, un outil en forme de manchon est utilisé pour appliquer un effort de poussée uniforme sur tous les éléments 14.1 à 14.2 de la partie intérieure 14.

Lorsque la partie intérieure 10 est extraite de la partie extérieure 16, les éléments 14.1, 14.2, 14.3 et 14.4 peuvent être écartés les uns des autres permettant d'accéder à la pastille et de la retirer en lui appliquant des contraintes réduites.

De manière avantageuse, on prévoit de mettre un lubrifiant entre la paroi latérale extérieure de la partie intérieure 14 et la paroi intérieure de la partie extérieure 16 pour faciliter le retrait de la partie intérieure 14 et réduire encore les contraintes appliquées à la pastille. Le lubrifiant est de préférence solide. Le choix du lubrifiant dépend notamment de la température de pressage afin d'éviter un dégagement qui pourrait contaminer la pastille. Par exemple le lubrifiant est du graphite ou du MoSz.

De préférence, la phase de compression a lieu sous vide ce qui permet de réduire la porosité et réaliser des pastilles de très bonne qualité. Une phase de compression sous atmosphère inerte ne sort pas du cadre de la présente invention, néanmoins les pastilles ainsi obtenues présentent une porosité plus élevée. Par exemple et de manière non limitative, le niveau de vide peut être de l'ordre de 0,05 bar.

A titre d'exemple uniquement, la partie extérieure a un diamètre intérieur de 40mm, un diamètre extérieur 90 mm et une épaisseur de 15 mm.

La partie intérieure a un diamètre extérieur de 40 mm, un diamètre intérieur de 13 mm et une épaisseur de 15 mm.

Le piston supérieur a une face de compression de diamètre 13 mm et la partie de diamètre 13 mm a une longueur de 12 mm.

Le piston inférieur a une portion de plus petit diamètre de 13 mm et de longueur 4 mm.

La chambre de compression selon l'invention est particulièrement adaptée à la réalisation de pastilles multicouches.

En effet, après avoir réalisé une pastille en un matériau comme décrit ci-dessus, il suffit de retirer le piston supérieur et/ou le piston inférieur et de disposer un matériau en poudre sur l'une ou les faces de la pastille, de l'aplanir et de réaliser une nouvelle étape de chauffage et compression. Il peut être réalisé autant de couches que souhaitées. En variante, plusieurs couches sont réalisées simultanément. Pour cela, on dispose une première couche de poudre dans la zone de compression, celle-ci est aplanie, puis une deuxième couche de poudre, qui est aplanie, et ainsi de suite en fonction du nombre de couches à réaliser, le piston supérieur est mis en place et l'étape de chauffage et de compression est appliquée à l'empilement de couches de poudre. Afin de garantir une interface plane et clairement définie entre les couches, les couches sont avantageusement prépressées à froid, i.e. après que la poudre a été aplanie, un premier pressage à basse pression et à froid est réalisé. Ce pré-pressage est réalisé après la mise en place de la poudre pour chaque couche. Le prépressage est réalisé au moyen des pistons. Ces phases de pré-pressage permettent de réaliser un assemblage de couches nettement distinctes les unes des autres. La pression exercée lors du prépressage est inférieure à celle appliquée lors du pressage à chaud et aucun chauffage n'est requis lors du prépressage.

Le piston inférieur et le piston supérieur pénètrent plus ou moins dans la première partie en fonction de l'épaisseur de poudre.

Ceci est particulièrement intéressant pour la fabrication de pastilles pour les batteries à électrolyte solide. En effet grâce à la chambre de compression selon l'invention, il est possible de réaliser une pastille comportant une couche centrale formant l'électrolyte et des couches d'extrémité formant pour l'une la cathode et pour l'autre l'anode.

Il est envisageable, en particulier pour réaliser des empilements de plusieurs couches dont certaines sont très minces, par exemple d'une épaisseur inférieure à 20 µm, de réaliser ces couches minces à partir de membranes en polymère, en céramique ou une combinaison de polymère et de céramique. En effet, lorsque les couches sont très minces, l'obtention de couche d'épaisseur uniforme peut être difficile. Par exemple, une ou des disques correspondant au diamètre de la presse est ou sont découpés dans une membrane en au matériau formant un séparateur et le ou les disques est ou sont mis en place sur une couche déjà pressée ou à presser. Le ou les disques sont ensuite pressés avec le ou les autres couches en poudre. Par exemple on dispose dans la chambre de compression une couche de matériau en poudre pour former une anode, on aplanit la couche, avantageusement on la prépresse, one dispose un disque en un matériau formant séparateur, puis on dispose une couche de matériau en poudre ou sous forme de disque pour former l'électrolyte, puis on dispose une couche de matériau en poudre pour former une cathode, on aplanit la couche, avantageusement on la prépresse. Plusieurs de ces empilements peuvent être réalisés successivement. Ensuite on exercer un force de compression au moyen du piston 10 et on applique un chauffage.

L'empilement comporte alors une ou des couches en poudre pressées et une ou des couches issues d'une membrane. Il est possible de combiner plusieurs types de couches, et d'intégrer des couches très fines d'épaisseur uniforme dans un empilement.

En variante, on peut envisager de réaliser une pastille à partir d'un empilement uniquement de disques.

La chambre de compression peut également être utilisée pour fabriquer des cellules bipolaires haute tension. Dans cette configuration, les couches se succèdent afin de réaliser des cellules formées chacune d'un empilement anode/électrolyte/cathode qui sont connectées en série, la couche formant une anode d'une cellule est formée sur la couche formant la cathode de la cellule suivante

Par exemple, dans le cas d'une batterie Lithium-ion à électrolyte solide, l'électrolyte peut être:
- l'un des sulfures conducteurs Li-ion, tells qu'un conducteur verre-céramique par exemple : XLi₂S * (1-X)P₂S₅ ou argyrodite comme LisPSsCI ou LGPS comme Li₁₀SiP₂S₁₂ ?
- un oxyde conducteur Li-ion ou un phosphate conducteur, par exemple: LLZO (oxyde de zirconium au lithium et au lanthane), LLTO (titanate lithium lanthane), LATP (Phosphate de Lithium aluminium titane).

Les sulfures, les oxydes et les phosphates mentionnés ci-dessus peuvent être utilisés en mélange avec un électrolyte polymère, tel que le PEO/LiTFSI et/ou un ou des liants, tels que le caoutchouc polyisobutène ou le caoutchouc butadiène-nitrile.

L'épaisseur de l'électrolyte solide est comprise entre 1 µm et 20 µm.

L'invention permet de réaliser des pastilles multicouches jusqu'à au moins 5000 µm d'épaisseur.

Le matériau pour réaliser la couche formant cathode est par exemple un mélange de l'un des matériaux de l'électrolyte solide récités ci-dessus, un agent conducteur et un matériau actif cathodique choisi la liste ci-dessous :
- Les oxydes stratifiées de formule LiNi_{X}Co_{Y}Mn_{Z}Al_{1-X-Y-Z}O_{Z}.
- Les oxydes à structure spinelle de formule générale LiNi_{X}Mn_{2-X}O₄.
- Les phosphates, tels que le LiFePO₄, LiCoPO₄.

L'agent conducteur peut être choisi parmi le noir de carbone, tel que le Carbon Super P^{®}, le Carbon Super C^{®} et le, Ketjenblack^{®} et les nanofibres de carbone tels que le VGCF^{®}.

La couche formant cathode a par exemple une épaisseur comprise entre: 30 µm et 200µm.

Le matériau pour réaliser la couche formant anode est par exemple un mélange de l'un des matériaux de l'électrolyte solide récités ci-dessus, un agent conducteur et un matériau actif cathodique choisi la liste ci-dessous :
- Le carbone graphite.
- LTO (Li₄Ti₅O₁₂).
- Le silicium, l'étant ou l'un de de le composite avec du graphite. L'épaisseur de la couche formant anode est par exemple comprise entre 30 µm et 200 µm.

Nous allons donner des exemples de diamètre de particules de poudre pouvant être utilisées dans la chambre de compression selon l'invention, les particules de sulfures ont un diamètre compris entre 1 µm et 5 µm. Les particules d'oxyde et de phosphates, qui ont des diamètres de l'ordre de la centaine de nm, sont agglomérées pour former des éléments de diamètre compris entre 2 µm et 10 µm. Les particules de charbon noir ont un diamètre de l'ordre de 50 nm et les particules de matériaux actifs, dont des exemples sont donnés ci-dessus, ont un diamètre de l'ordre de quelques µm.

L'invention est également particulièrement avantageuse pour réaliser des pastilles en céramique qui sont très sensibles aux contraintes lors de leur retrait. La chambre de compression peut être en graphite et les matériaux utilisés peuvent être les céramiques oxyde et phosphate, le silicium et les nitrures métalliques.

La chambre de compression peut être facilement adaptée pour une fabrication automatisée et en grande série, notamment en mettant en oeuvre des moyens de serrage de type à genouillère ou autre qui permettent un desserrage automatisé et rapide des deux élément de la partie extérieure.

La chambre de compression selon l'invention est particulièrement avantageuse dans une presse à chaud, mais il sera compris qu'elle peut être utilisée sans application de chaleur lors de la compression.

## Revendications

1. Chambre de compression pour la fabrication de pastilles par pressage de matériau,
ladite chambre présentant un axe longitudinal (X) et comportant une partie intérieure (14) et une partie extérieure (16),
la partie intérieure (14) comportant une paroi tubulaire cylindrique à section circulaire délimitant latéralement une zone de compression,
ladite paroi tubulaire comprenant au moins trois éléments (14.1, 14.2, 14.3) de section transversale en forme d'arc de cercle,
la partie extérieure (16) comportant un logement de section circulaire dimensionné pour recevoir la partie intérieure et maintenir les éléments (14.1, 14.2, 14.3, 14.4) de la partie intérieure les uns contre les autres,
ladite partie extérieure (16) comportant deux éléments (16.1, 16.2) et des moyens de fixation comprenant des moyens de serrage des deux éléments l'un contre l'autre de telle sorte que, dans un état desserré, un jeu existe entre le logement de la partie extérieure (16) et la partie intérieure (14), et à l'état serré la partie extérieure (16) est en contact avec la partie intérieure (14) et assure le maintien des éléments (14.1, 14.2, 14.3, 14.4) de la partie intérieure les uns contre les autres,
la chambre de compression comportant également un piston supérieur (10) configuré pour pénétrer longitudinalement dans la partie intérieure (14) et comportant un face de compression formant une face longitudinale de la zone de compression, et
un piston inférieur (8) configuré pour pénétrer longitudinalement dans la partie intérieure (14) et comportant une face de compression formant une autre face longitudinale de la zone de compression,
**caractérisée en ce que** toutes les pièces de la chambre de compression sont réalisées dans le même matériau.

2. Chambre de compression selon la revendication 1, dans laquelle toutes les pièces de la chambre de compression sont réalisées en carbure de tungstène ou en graphite.

3. Chambre de compression selon la revendication 1 ou 2, dans laquelle la partie intérieure (14) comporte quatre éléments (14.1, 14.2, 14.3, 14.4).

4. Chambre de compression selon l'une des revendications 1 à 3, comportant un lubrifiant solide entre la surface latérale extérieure de la première partie et la surface du logement de la deuxième partie.

5. Chambre de compression selon l'une des revendications 1 à 4, dans laquelle les moyens de serrage comportent au moins deux vis.

6. Chambre de compression selon l'une des revendications 1 à 5, dans laquelle le piston supérieur (10) comporte une première portion portant la face de compression, et une deuxième portion destinée à être en contact avec des moyens de chauffage de la presse et des moyens de compression, ladite deuxième portion présentant une section transversale supérieure à la première portion.

7. Chambre de compression selon l'une des revendications 1 à 6, dans laquelle le piston supérieur (10) comporte une section transversale constante et à une extrémité opposée à celle portant la face de compression, une face destinée à être en contact avec des moyens de chauffage et avec des moyens de compression, ladite face étant bordée par un chanfrein.

8. Presse pour fabrication de pastille comportant une chambre de compression selon l'une des revendications précédentes destinée à recevoir le ou les matériaux destinés à former la pastille, des moyens de compression configurés pour exercer un effort sur au moins l'un des pistons en direction de l'autre piston.

9. Presse selon la revendication 8, comportant des moyens de chauffage configurés pour venir en contact avec une face d'au moins un des pistons inférieur et supérieur, ladite face étant opposée à la face de compression.

10. Procédé de fabrication d'une pastille mettant en oeuvre une presse selon la revendication 8 ou 9, comportant les étapes :
a) assemblage de la chambre de compression,
b) mise en place du matériau dans la zone de compression sur la face de compression du piston inférieur,
c) mise en place du piston supérieur,
d) application d'un effort sur au moins l'un des pistons inférieur et supérieur,
e) arrêt de l'application de la force,
f) retrait du piston inférieur et/ou du piston supérieur,
g) desserrage des moyens de serrage de la deuxième partie,
h) extraction par coulissement axial de la première partie de la deuxième partie,
i) écartement des éléments de la première partie,
j) retrait de la pastille.

11. Procédé de fabrication selon la revendication 10 en combinaison avec la revendication 9, dans lequel lors de l'étape d) un chauffage est appliqué au piston supérieur et/ou au piston inférieur et lors de l'étape e) l'application du chauffage est interrompue.

12. Procédé de fabrication selon la revendication 10 ou 11, dans lequel le matériau est un matériau en poudre et dans lequel, lors de l'étape b), la poudre est aplanie et/ou un effort inférieur à celui exercé à l'étape d) est appliqué à la poudre.

13. Procédé de fabrication selon la revendication 10, 11 ou 12, comportant entre les étapes f) et g), n répétitions des étapes b) à e) le matériau étant identique ou différent du matériau mis en place précédemment, n étant un entier strictement positif, de sorte à former une pastille multicouche.

14. Procédé de fabrication selon la revendication 13, dans lequel lors de la répétition des étapes b) à e) le matériau mis en place est une portion de membrane ayant la section de la chambre de compression.

15. Procédé de fabrication selon la revendication 14, dans lequel la portion de membrane a une épaisseur comprise entre 1 µm et 20 µm.

16. Procédé de fabrication selon l'une des revendications 10 à 15, dans lequel au moins l'étape d) se déroule dans un environnement sous vide.

17. Procédé de fabrication selon l'une des revendications 10 à 16 en combinaison avec la revendication 13, dans lequel on réalise au moins trois couches, une couche à partir d'un matériau en poudre formant une électrode formant anode, une couche à partir d'un matériau en poudre pour former un électrolyte solide pour batterie à électrolyte solide, et une couche à partir d'un matériau en poudre formant une électrode formant cathode, l'électrolyte étant entre l'anode et la cathode.

18. Procédé de fabrication selon la revendication 17 en combinaison avec la revendication 14, entre la mise en place du matériau formant l'une des électrodes et celui formant l'électrolyte on dispose un matériau sous forme de membrane destiné à former un séparateur.

## Patentansprüche

1. Kompressionskammer zum Herstellen von Pellets durch Pressen von Material, wobei die Kammer eine Längsachse (X) aufweist und einen Innenteil (14) und einen Außenteil (16) umfasst,
wobei der Innenteil (14) eine zylindrische rohrförmige Wand mit kreisförmigem Querschnitt umfasst, die seitlich einen Kompressionsbereich begrenzt,
wobei die rohrförmige Wand mindestens drei Elemente (14.1, 14.2, 14.3) mit kreisbogenförmigem Querschnitt umfasst,
wobei der Außenteil (16) ein Gehäuse mit kreisförmigem Querschnitt umfasst, das so dimensioniert ist, dass es den Innenteil aufnimmt und die Elemente (14.1, 14.2, 14.3, 14.4) des Innenteils gegeneinander hält,
wobei das Außenteil (16) zwei Elemente (16.1, 16.2) und Mittel zum Befestigen, die Mittel zum Zusammenklemmen der beiden Elemente enthalten, umfasst, so dass in einem gelösten Zustand ein Spiel zwischen dem Gehäuse des Außenteils (16) und dem Innenteil (14) vorhanden ist, und im festgeklemmten Zustand der Außenteil (16) mit dem Innenteil (14) in Kontakt steht und gewährleistet, dass die Elemente (14.1, 14.2, 14.3, 14.4) des Innenteils gegeneinander gehalten werden,
wobei die Kompressionskammer außerdem einen oberen Kolben (10) umfasst, der dazu konfiguriert ist, in Längsrichtung in den Innenteil (14) einzudringen, und eine Kompressionsfläche umfasst, die eine Längsfläche des Kompressionsbereichs bildet, und
einen unteren Kolben (8), der dazu konfiguriert ist, in Längsrichtung in den Innenteil (14) einzudringen, und eine Kompressionsfläche umfasst, die eine weitere Längsfläche des Kompressionsbereichs bildet,
**dadurch gekennzeichnet, dass** alle Bauteile der Kompressionskammer aus dem gleichen Material hergestellt sind.

2. Kompressionskammer nach Anspruch 1, wobei alle Bauteile der Kompressionskammer aus Wolframcarbid oder Graphit hergestellt sind.

3. Kompressionskammer nach Anspruch 1 oder 2, wobei der Innenteil (14) vier Elemente (14.1, 14.2, 14.3, 14.4) umfasst.

4. Kompressionskammer nach einem der Ansprüche 1 bis 3, die ein festes Schmiermittel zwischen der äußeren Seitenfläche des ersten Teils und der Oberfläche des Gehäuses des zweiten Teils umfasst.

5. Kompressionskammer nach einem der Ansprüche 1 bis 4, wobei die Klemmmittel mindestens zwei Schrauben umfassen.

6. Kompressionskammer nach einem der Ansprüche 1 bis 5, wobei der obere Kolben (10) einen ersten Abschnitt umfasst, der die Kompressionsfläche trägt, und einen zweiten Abschnitt, der dazu bestimmt ist, mit Heizmitteln der Presse und Kompressionsmitteln in Kontakt zu stehen, wobei der zweite Abschnitt einen größeren Querschnitt als der erste Abschnitt aufweist.

7. Kompressionskammer nach einem der Ansprüche 1 bis 6, wobei der obere Kolben (10) einen konstanten Querschnitt und an einem Ende gegenüber dem, das die Kompressionsfläche trägt, eine Fläche umfasst, die dazu bestimmt ist, mit den Heizmitteln und den Kompressionsmittels in Kontakt zu stehen, wobei die Fläche durch eine Schrägkante umrandet ist.

8. Presse zum Herstellen von Pellets, die eine Kompressionskammer nach einem der vorhergehenden Ansprüche, die dazu bestimmt ist, das bzw. die zum Bilden des Pellets bestimmten Materialien aufzunehmen, und Kompressionsmittel umfasst, die dazu konfiguriert sind, auf mindestens einen der Kolben eine Kraft in Richtung des anderen Kolbens auszuüben.

9. Presse nach Anspruch 8, die Heizmittel umfasst, die dazu konfiguriert sind, mit einer Fläche von mindestens einem des unteren und des oberen Kolbens in Kontakt zu kommen, wobei die Fläche der Kompressionsfläche gegenüberliegt.

10. Verfahren zum Herstellen eines Pellets unter Verwendung einer Presse nach Anspruch 8 oder 9, das die folgenden Schritte umfasst:
a) Montieren der Kompressionskammer,
b) Einführen des Materials in den Kompressionsbereich auf der Kompressionsfläche des unteren Kolbens,
c) Einführen des oberen Kolbens,
d) Aufbringen einer Kraft auf mindestens einen des unteren und des oberen Kolbens,
e) Beenden des Ausübens der Kraft,
f) Entfernen des unteren Kolbens und/oder des oberen Kolbens,
g) Lösen der Klemmmittel des zweiten Teils,
h) Herausziehen des ersten Teils aus dem zweiten Teil durch axiales Verschieben,
i) Beabstanden der Elemente des ersten Teils,
j) Entfernen des Pellets.

11. Herstellungsverfahren nach Anspruch 10 in Kombination mit Anspruch 9, wobei im Schritt d) ein Erwärmen auf den oberen Kolben und/oder den unteren Kolben angewandt wird und im Schritt e) das Anwenden des Erwärmens unterbrochen wird.

12. Herstellungsverfahren nach Anspruch 10 oder 11, wobei das Material ein Pulvermaterial ist und wobei im Schritt b) das Pulver flachgedrückt wird und/oder eine geringere Kraft als die im Schritt d) ausgeübte Kraft auf das Pulver ausgeübt wird.

13. Herstellungsverfahren nach Anspruch 10, 11 oder 12, das zwischen den Schritten f) und g) n Wiederholungen der Schritte b) bis e) umfasst, wobei das Material mit dem zuvor eingeführten Material identisch oder von diesem verschieden ist, wobei n eine streng positive ganze Zahl ist, um ein mehrschichtiges Pellet zu bilden.

14. Herstellungsverfahren nach Anspruch 13, wobei bei der Wiederholung der Schritte b) bis e) das eingeführte Material ein Membranabschnitt ist, der den Querschnitt der Kompressionskammer aufweist.

15. Herstellungsverfahren nach Anspruch 14, wobei der Membranabschnitt eine Dicke zwischen 1 µm und 20 µm aufweist.

16. Herstellungsverfahren nach einem der Ansprüche 10 bis 15, wobei mindestens der Schritt d) in einer Umgebung unter Vakuum erfolgt.

17. Herstellungsverfahren nach einem der Ansprüche 10 bis 16 in Verbindung mit Anspruch 13, wobei mindestens drei Schichten hergestellt werden, wobei eine Schicht aus einem pulverförmigen Material eine Elektrode bildet, die eine Anode bildet, eine Schicht aus einem pulverförmigen Material einen Festelektrolyten für eine Festelektrolytbatterie bildet und eine Schicht aus einem pulverförmigen Material eine Elektrode bildet, die eine Kathode bildet, wobei sich der Elektrolyt zwischen der Anode und der Kathode befindet.

18. Herstellungsverfahren nach Anspruch 17 in Kombination mit Anspruch 14, wobei zwischen dem Einfügen des Materials, das eine der Elektroden bildet, und dem, das den Elektrolyten bildet, ein Material in Form einer Membran angeordnet ist, das dazu bestimmt ist, einen Separator zu bilden.

## Claims

1. A compression chamber for the manufacture of pellets by pressing material, said chamber having a longitudinal axis (X) and including an inner part (14) and an outer part (16),
the inner part (14) including a cylindrical tubular wall with circular section laterally delimiting a compression zone,
said tubular wall comprising at least three elements (14.1, 14.2, 14.3) of circular arc-shaped cross-section,
the outer part (16) including a housing of circular section sized to receive the inner part and hold the elements (14.1, 14.2, 14.3, 14.4) of the inner part against each other,
said outer part (16) including two elements (16.1, 16.2) and fastening means comprising means for clamping the two elements against each other such that, in a loosened state, a clearance exists between the housing of the outer part (16) and the inner part (14), and in the tightened state the outer part (16) is in contact with the inner part (14) and ensures the holding of the elements (14.1, 14.2, 14.3, 14.4) of the inner part against each other,
the compression chamber also including an upper piston (10) configured to penetrate longitudinally into the inner part (14) and including a compression face forming a longitudinal face of the compression zone, and a lower piston (8) configured to penetrate longitudinally into the inner part (14) and including a compression face forming another longitudinal face of the compression zone,
**characterized in that** all the components of the compression chamber are made of the same material.

2. The compression chamber according to claim 1, wherein all the components of the compression chamber are made of tungsten carbide or graphite.

3. The compression chamber according to claim 1 or 2, wherein the inner part (14) includes four elements (14.1, 14.2, 14.3, 14.4).

4. The compression chamber according to one of claims 1 to 3, including a solid lubricant between the outer lateral surface of the first part and the surface of the housing of the second part.

5. The compression chamber according to one of claims 1 to 4, wherein the clamping means include at least two screws.

6. The compression chamber according to one of claims 1 to 5, wherein the upper piston (10) includes a first portion carrying the compression face, and a second portion intended to be in contact with heating means of the press and compression means, said second portion having a cross section greater than the first portion.

7. The compression chamber according to one of claims 1 to 6, wherein the upper piston (10) includes a constant cross section and at an end opposite that carrying the compression face, a face intended to be in contact with heating means and with compression means, said face being bordered by a chamfer.

8. A press for manufacturing pellets including a compression chamber according to one of the preceding claims intended to receive the material(s) intended to form the pellet, compression means configured to exert a force on at least one of the pistons in the direction of the other piston.

9. The press according to claim 8, including heating means configured to come into contact with a face of at least one of the lower and upper pistons, said face being opposite the compression face.

10. A method for manufacturing a pellet using a press according to claim 8 or 9, including the steps:
a) assembling the compression chamber,
b) placing the material in the compression zone on the compression face of the lower piston,
c) placing the upper piston,
d) applying a force on at least one of the lower and upper pistons,
e) stopping the application of force,
f) removing the lower piston and/or the upper piston,
g) loosening the clamping means of the second part,
h) extracting by axially sliding the first part from the second part,
i) spacing the elements of the first part,
j) removing the pellet.

11. The manufacturing method according to claim 10 as combined with claim 9, wherein in step d) heating is applied to the upper piston and/or to the lower piston and in step e) the application of heating is interrupted.

12. The manufacturing method according to claim 10 or 11, wherein the material is a powder material and wherein, in step b), the powder is flattened and/or a force less than that exerted in step d) is applied to the powder.

13. The manufacturing method according to claim 10, 11 or 12, including between steps f) and g), n repetitions of steps b) to e), the material being identical or different from the material previously placed, n being a strictly positive integer, so as to form a multilayer pellet.

14. The manufacturing method according to claim 13, wherein when repeating steps b) to e) the placed material is a portion of membrane having the section of the compression chamber.

15. The manufacturing method according to claim 14, wherein the membrane portion has a thickness comprised between 1 µm and 20 µm.

16. The manufacturing method according to one of claims 10 to 15, wherein at least step d) takes place in a vacuum environment.

17. The manufacturing method according to one of claims 10 to 16 as combined with claim 13, wherein at least three layers are produced, one layerfrom a powder material forming an anode electrode, one layer from a powder material to form a solid electrolyte for a solid electrolyte battery, and one layer from a powder material forming a cathode electrode, the electrolyte being between the anode and the cathode.

18. The manufacturing method according to claim 17 as combined with claim 14, a material in the form of a membrane intended to form a separator is disposed between the placement of the material forming one of the electrodes and that forming the electrolyte.
